Europäisches Patentamt

European Patent Office

Office européen des brevets

(19)

(11) Publication number: 0 379 771

A2

## (12) EUROPEAN PATENT APPLICATION

(21) Application number: 89306722.3

(22) Date of filing: 03.07.89

(51) Int. Cl.5: G06F 12/08

(30) Priority: 27.01.89 US 303471

(43) Date of publication of application:
01.08.90 Bulletin 90/31

(84) Designated Contracting States:
AT BE CH DE ES FR GB GR IT LI LU NL SE

(71) Applicant: DIGITAL EQUIPMENT
CORPORATION
146 Main Street
Maynard, MA 01754(US)

(72) Inventor: Chinnaswamy, Kumar
12C Country Club Lane
Milford Massachusetts 01757(US)
Inventor: Flynn, Michael E.
3 Westview Street
Grafton Massachusetts 01519(US)
Inventor: Lynch, John J.
46 Bent Avenue
Wayland Massachusetts 01778(US)

(74) Representative: Goodman, Christopher et al
Eric Potter & Clarkson St. Mary's Court St.
Mary's Gate
Nottingham NG1 1LE(GB)

(54) Read Abort Process.

(57) A method and apparatus for minimizing memory read latency in a digital computer system which includes a system control unit (SCU) with an associated main memory, and a plurality of independent central processing units (CPU's), each CPU having an associated writeback cache. Data requests from a requesting CPU start a normal read cycle in the SCU main memory, and the data read requests concurrently begin a search for the location of any modified version of the requested data in the SCU data storage location directory, which stores the location of modified data located in both the SCU main memory and the caches of all the CPU's. The SCU main memory write cycle is aborted if a modified version of the requested data is found in any of the CPU caches, and the modified version of the requested data is then passed from the located CPU cache and through the SCU to the requesting CPU as read data.

FIG. 2

## READ ABORT PROCESS

### Field of the Invention

The present invention relates to digital computer memory control systems, and more particularly to a method and apparatus for automatically aborting the reading of a system control unit (SCU) main memory in response to an associated central processing unit (CPU) when a modified version of the requested data is available in another associated CPU cache.

### Background of the Invention

When a digital computer system incorporates an architecture which includes an SCU with an associated main memory and multiple independent CPU's, each CPU with its own associated writeback cache, a modified version of data located in the SCU main memory may be located in the writeback cache of its associated CPU's. Consequently, when one of the CPU's sends a request to the SCU for selected data, the presence of a modified version of the requested data in another one of the CPU's must be determined before the requested data stored in the SCU main memory is transferred to the requesting CPU.

The usual method of retrieving the modified version of requested data is to first determine the location of the modified data, whether it be in the SCU main memory or one of the CPU caches, and then to retrieve the modified data from the determined location. Although this method works, increased memory read latency results because of the delay required to first locate any modified version of the requested data and then transfer it to the requesting CPU.

Methods employed to alleviate memory read latency in such computer systems generally require inter CPU communication links, as well as the normal CPU to SCU communication links, to "broadcast" requested data location information to a requesting CPU, or a common SCU/CPU system bus with associated system bus interface subsystems for the SCU and each CPU to communicate modified data locations to each CPU cache as modified data is written. However, these methods require overly complex and expensive communication links as well as sophisticated hardware and extra memory capacity in each CPU for the acquisition and retention of modified data information in each CPU.

### Summary of the Invention

The present invention permits the use of ordinary CPU to SCU communication links with all modified data storage location information stored in the SCU location directory. Whenever modified data is entered into the CPU cache, the location address information for the modified data is transferred to the SCU data location directory for storage. Whenever one of the CPU's requests data from the SCU, the SCU starts a normal read cycle of the requested data from the SCU main memory. However, the SCU also concurrently searches the stored data location addresses in the SCU directory to find the location of any modified version of the requested data in any of the CPU caches. If such modified data is located in one of the CPU caches, the SCU main memory unit read operation is aborted, and the SCU transfers the modified data from the located CPU to the requesting CPU in the same way that it would be transferred from the SCU main memory itself. Concurrently, the modified data is written into the SCU main memory and the modified data location is readdressed as present in the SCU main memory.

However, if the modified data search indicates that the data read from the SCU main memory is the most current version available, the initiated SCU main memory read cycle is permitted to complete, and the requested data so read is transferred to the requesting CPU.

Consequently, minimum memory read latency is provided with simple CPU/SCU communication links. A data request from a CPU initiates a normal memory read operation from the SCU main memory which completes itself unless an alternative location for a more current version of the requested data is found by the SCU during a concurrent modified data location search. If such location is found during the initiation of the SCU main memory read operation, the read operation is aborted, and the modified data is passed from the CPU cache where it has been located, through the SCU, and back to the requesting CPU. Thus, the maximum memory read latency only exceeds that of a normal SCU main memory read cycle by that period required to locate the location of modified data and terminate the SCU main memory read cycle. Thus, data transfer bandwidth between the CPU's and SCU is minimized while retaining simple computer system architecture.

### Description of the Drawings

Figure 1 is a block diagram of a typical computer system with a SCU and associated independent CPU's suitable for incorporating the present invention.

Figure 2 is a basic flow chart of logic steps for the preferred embodiment of the present invention adapted for use with the system shown in Figure 1.

Figure 3 is a typical block diagram of the preferred embodiment of the present invention for use with the digital computer system shown in Figure 1.

Description of the Preferred Embodiment

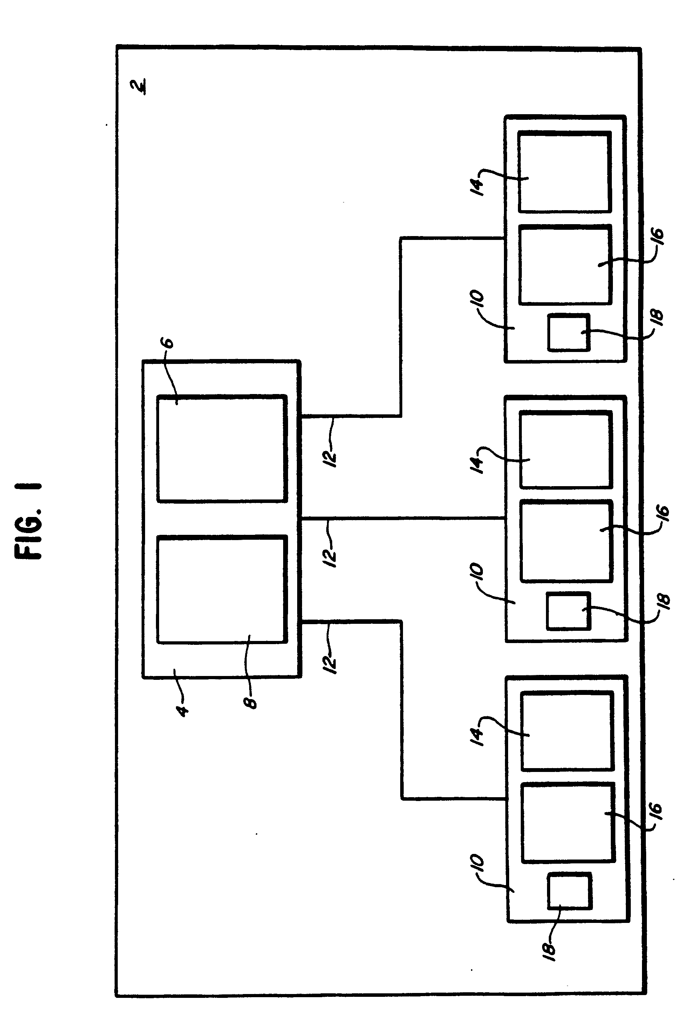

Referring to the drawings, wherein like reference characters designate like or corresponding parts throughout the views, Figure 1 shows a typical digital computer system 2 suitable for incorporating the present invention. The system 2 includes a system control unit (SCU) 4 with an associated SCU main memory 6 and SCU data storage location directory 8. The SCU 4 is typically interconnected to a plurality of independent central processing units (CPU's) 10 via associated data bus links 12. Each one of the CPU's 10 has a writeback cache 14, a control unit 16 and an input/output (I/O) unit 18.

The CPU's 10 may individually update stored data in their associated caches 14, which modified data may not be in the SCU main memory 6, including a modified version of data that is stored in the SCU main memory 6, as is well known in the art. However, as also well known in the art, the addresses of data written into the individual CPU's 10 are transferred to the SCU 4 for storage in the SCU data storage location directory 8, so that the SCU 4 can search for, and locate, any modified data in any of the CPU's 10 requested by any other of the CPU's 10. The SCU main memory 6, and the SCU directory 8, as well as the CPU writeback cache 14, the CPU control unit 16 and the CPU I/O unit 18 for each of the associated CPU's 10 in Figure 1, are well known elements which may be interconnected in a variety of well known configurations, and they are shown in Figure 1 in block form for purposes of representation only, since they in themselves do not constitute part of the present invention.

Since the SCU data storage location directory 8 stores all the data storage location information, it is possible to first interrogate the SCU directory 8 to find the location of the most current version of any data requested by a requesting one of the CPU's 10, and then, once the address of the most current version of the requested data is determined, read the data from the corresponding source, whether it be from the SCU main memory 6 or one of the other CPU caches 14.

However, such a procedure as described above can cause unnecessary memory read latency, particularly if most requested data stored in the SCU main memory 6 is current. This is because, as described above, all the data storage locations have to be searched by the SCU 4 before a normal read cycle of the SCU main memory 6 can be initiated, even though most data stored in the SCU main memory 6 is current.

The present invention obviates this unnecessary memory read latency by beginning a normal read cycle of the SCU main memory 6 as soon as possible after a request from a requesting one of the CPU's 10. Concurrently, an interrogation of the data locations stored in the SCU data storage location directory 8 is conducted to determine the location of a modified version of the requested data. If it is found to be in the SCU main memory 6, the initial read cycle of the SCU main memory 6 is allowed to continue. However, if the most current version of the requested data is determined to be in one of the CPU caches 14, an abort command is sent to the SCU main memory 6 to end the normal read cycle of the SCU main memory 6, and the CPU cache 14 which has been determined to have the most current version of the requested data is then interrogated. The data is read from the located one of the CPU caches 14, and then the data is passed through the SCU 4 to the requesting one of the CPU's 10.

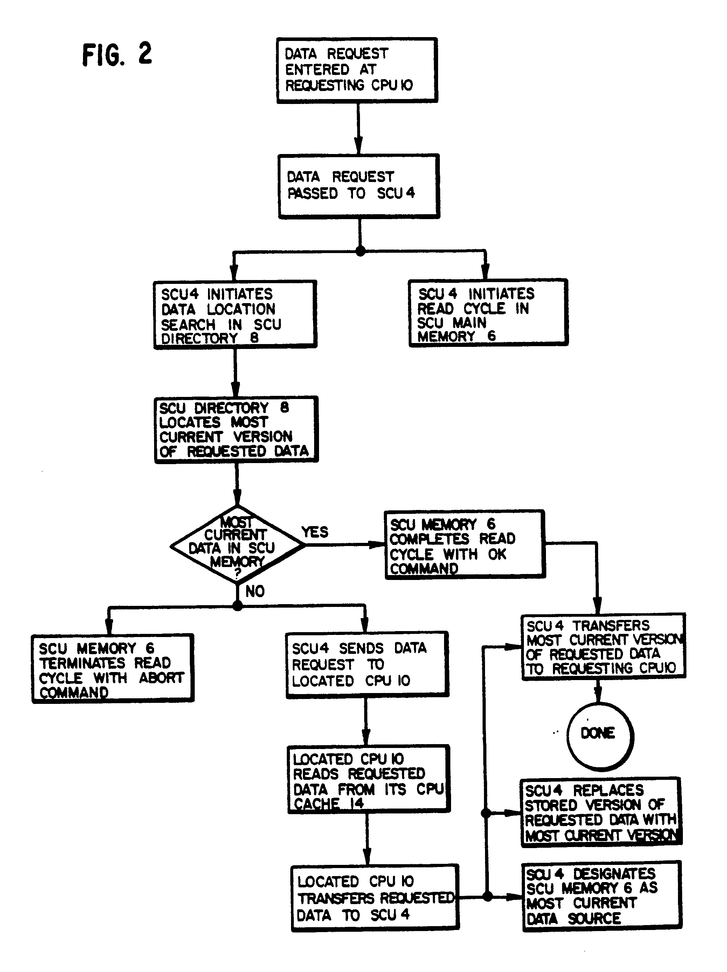

The methodology of the present invention is shown in the system flow chart of Figure 2. A requesting one of the CPU's 10 requests selected data via its associated I/O unit 18 and control unit 16. The data request is transmitted via its associated data bus link 12 to the SCU 4. The SCU 4 concurrently initiates a normal read cycle of its SCU main memory 6 to retrieve the requested data and initiates a search of its SCU data storage location directory 8 to locate the most current version of the requested data.

After the SCU data storage location directory 8 determines the location of the most current version of the requested data, the SCU determines whether or not the determined location is in the SCU main memory 6. If it is, the SCU main memory 6 is given an "OK" command by the SCU 4 to complete its initiated read cycle, and after completion of the read cycle, the requested data is transferred back to the requesting one of the CPU's 10 via its associated data bus link 12.

If the most current version of the requested data is determined to not be in the SCU main memory 6, the SCU 4 aborts the initiated read cycle for the SCU main memory 6 with an "ABORT" command, and the SCU 4 concurrently sends a data request to the located one of the CPU's 10 determined to have the most current version of the requested data via its associated data bus link 12. The located one of the CPU's 10 then reads the most current version of the requested data stored in its associated CPU cache 14, and then the requested data so read is transferred back to the SCU 4 from the located one of the CPU's 10 via its associated data bus link 12. The SCU 4 passes the requested data received to the requesting one of the CPU's 10 via its associated data bus link 12. Concurrently, the SCU 4 replaces its stored version of the requested data with the most current version received from the located one of the CPU 10, and also designates in the SCU directory 8 that the SCU main memory now has the most current version of the requested data.

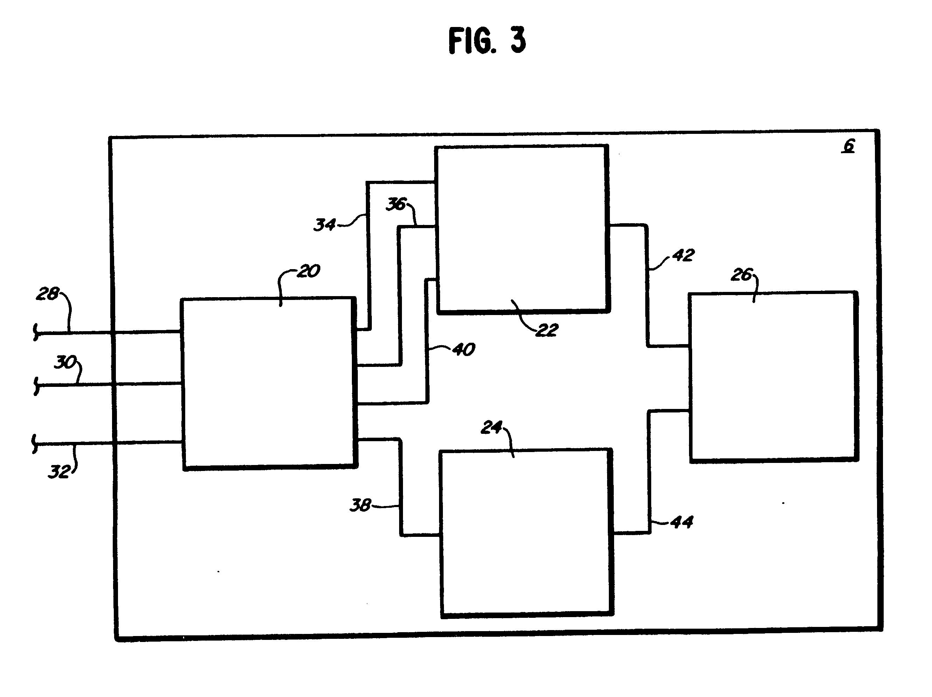

The read abort process according to the present invention is easily implemented with the preferred embodiment shown in Figure 3. The SCU main memory 6 includes a SCU memory interface unit 20, a memory array controller 22, a memory address select buffer 24 and a memory array 26. These are all well known elements which may be interconnected in a variety of well known configurations, and they are shown in Figure 3 in block form only for purposes of representation, since they in themselves do not constitute part of the present invention. The SCU 4 initiates a memory read cycle as described above by concurrently asserting a "LOAD COMMAND" signal on a load command line 28 and a "READ" signal on a command line 30, both lines 28 and 30 feeding the SCU/memory interface unit 20. A SCU read cycle status line 32 between the SCU 4 and the SCU/memory interface unit 20 of the SCU main memory 6 serves to communicate the "OK" or "ABORT" command between the SCU 4 and the SCU main memory 6 as described above according to well known procedure. The interface unit 20 responds by providing a "START" signal on a memory start line 34, a "READ" signal on a memory array command line 36 and a selected address signal on an address select line 38. The "START" signal on the memory start line 34 and the "READ" signal on the memory array command line 36 are fed to the memory array controller 22. A memory array status line 40 also interconnects the memory array controller 22 to the interface unit 20 to transfer the "OK" or "ABORT" read cycle command to the memory array controller 22. The memory array controller 22 responds to the "START" signal on the line 34 and the "READ" signal on the line 36 by providing a series of three signals on a memory array strobe line 42. These three signals are a "ROW ADDRESS STROBE (RAS)" signal, a "COLUMN ADDRESS STROBE (CAS)" signal and a "WRITE ENABLE" signal.

The address select line 38 feeds the memory address select buffer 24, and the address select buffer 24 responds to the select address signal on the line 38 by providing an address signal on a memory array address line 44.

The memory array strobe line 42 and the memory array address line 44 both feed the memory array 26. The memory array address line 44 provides the address signal to the memory 26 while the RAS signal is asserted on the strobe line 42. After the RAS timing requirements are satisfied, the CAS signal is asserted on the strobe line 42. Once the CAS timing requirements are satisfied, data corresponding to the address signal on the address line 44 is read. The "WRITE ENABLE" signal is not asserted unless data is designated to be replaced.

When the SCU directory 8 determines that the most current version of the requested data is in the SCU main memory 6 according to well known procedure, the SCU 4 sends an "OK" signal on the main memory status line 32 to the interface unit 20. The interface unit 20 then passes the "OK" status signal to the memory array controller 22 to allow the memory read cycle to proceed to completion as described above.

However, when the SCU directory 8 determines that the most current version of the requested data is not in the SCU main memory, but rather in one of the CPU caches 14 according to well known procedure, the SCU 4 sends an "ABORT" signal to the interface unit 20 on the main memory status line 32. The interface unit 20 then passes the "ABORT" signal to the memory array controller 22 to terminate the read cycle described above as soon as possible. Because of the RAS and CAS timing restraints, the RAS and CAS signals may have to be asserted for some time after the "ABORT" signal has been received by the memory array controller 22.

Nevertheless, the read abort process as described above minimizes the memory read latency of the computer system 2 while having no impact on data transfer bandwidth. The memory efficiency of the computer system 2 is compromised to some extent because some memory read cycles are started and not completed. However, this compromise is minimal when most requested data stored in the SCU main memory 6 is determined to be current.

It will be understood that various changes in the details, arrangements and configurations of the parts and assemblies which have been described and illustrated above in order to explain the nature of the present invention may be made by those skilled in the art within the principle and scope of the present invention as expressed in the appended claims.

## Claims

1. For a digital computer system including a system control unit (SCU) having a memory unit, a data location directory, and a plurality of central processor units (CPU's), each of said CPU's having a writeback cache, a method of minimizing memory read latency for CPU requested data in memory storage, comprising the steps of:
transmitting the location of modified data to said SCU when said modified data is stored in a cache of one of said CPU's;
storing said modified data storage location in said data location directory of said SCU;
receiving a request at said SCU for data from one of said CPU's;
reading said requested data from said memory of said SCU;
concurrently with said step of reading, searching said data location directory of said SCU to determine if a modified version of said requested data is in one of said CPU caches; and
aborting said step of reading said requested data from said SCU memory if a modified version of said requested data is identified as stored in one of said CPU caches by said step of searching said data location directory.

2. The method recited in claim 1, wherein said step of searching is completed before said step of reading is completed.

3. The method recited in claim 2, wherein said step of aborting is completed before said step of reading is completed.

4. The method recited in claim 1, further comprising the steps of:
transferring said modified version of said requested data from said located CPU cache through said SCU to said requesting CPU;
storing said modified data in said SCU memory; and
storing the location of said modified data stored in said SCU memory into said SCU data location directory.

5. For a digital computer system including a system control unit (SCU) having a memory unit, a data location directory, and a plurality of central processor units (CPU's), each of said CPU's having a writeback cache, a method of minimizing memory read latency for CPU requested data in memory storage, comprising the steps of:
receiving a request at said SCU for data from one of said CPU's;
reading said requested data from said memory of said SCU;
concurrently with said step of reading, searching said data location directory of said SCU to determine if a modified version of said requested data is in one of said CPU caches; and
aborting said step of reading said requested data from said SCU memory if a modified version of said requested data is identified as stored in one of said CPU caches by said step of searching said data location directory.

6. The method recited in claim 5, wherein said step of searching is completed before said step of reading is completed.

7. The method recited in claim 6, wherein said step of aborting is completed before said step of reading is completed.

8. The method recited in claim 5, further comprising the steps of:
transferring said modified version of said requested data from said located CPU cache through said SCU to said requesting CPU;
storing said modified data in said SCU memory; and
storing the location of said modified data stored in said SCU main memory into said SCU data location directory.

9. A memory device useful in a digital computer having a plurality of central processor units (CPU's) and a system control unit (SCU) which generates an interrogate signal upon receipt of the request for data from one of said CPU's and subsequently generates an abort signal if the most current version of the CPU requested data is located at one of the other CPU's, for minimizing memory read latency for CPU requested data stored in said memory device, comprising:
read means for reading the CPU requested data from said memory device;
means for decoding the interrogate signal and said abort signal;
means responsive to said decoded interrogate signal for activating said read means to begin reading said requested data from said memory device; and,
means responsive to said decoded abort signal for preventing said read means from completing the reading of said requested data from said memory device.

10. A memory device for use in a system control unit (SCU) and adapted to work in a computer system having multiple central processing units (CPU's) and which minimizes memory read latency for CPU requested data stored in said memory device, comprising:
read means having a read cycle for reading said CPU requested data from said memory device;
means for decoding an interrogate signal from said SCU representative of a request from one of said CPU's for said CPU requested data;

means responsive to said decoded interrogate signal for initiating said read cycle of said read means to begin reading said CPU requested data from said memory device;

means for decoding an abort signal from said SCU representative of a determination that said CPU requested data in said memory device does not contain the most current version of said CPU requested data; and,

means responsive to said decoded abort signal for terminating said read cycle of said read means and preventing the completion of the reading of said CPU requested data from said memory device.

11. Apparatus useful in a digital computer having a memory, a data location directory and a plurality of central processing units (CPU's), for minimizing memory read latency for CPU requested data in memory storage, comprising:

means for receiving the location of modified data when said modified data is stored in one of the CPU's;

means for storing said modified data storage location in said data location directory;

means for receiving a request for data;

means having a search cycle for searching said data location directory to determine if a modified version of said requested data is stored in one of said CPU's;

means having a read cycle for reading said requested data from said memory;

said search cycle of said searching means occurring concurrently with said read cycle of said read means; and,

means for aborting said read cycle of said read means if said means for searching determines that a modified version of said requested data is stored in one of the CPU's.

12. Apparatus useful in a digital computer having a memory, a data location directory and a plurality of central processing units (CPU's), for minimizing memory read latency for CPU requested data in memory storage, comprising:

means for receiving the location of modified data when said modified data is stored in one of said CPU's;

means responsive to said location receiving means for storing said modified data storage location in said data location directory;

means for receiving a request for data;

means responsive to said data receiving means for searching said data location directory to determine if a modified version of said requested data is stored in one of said CPU's;

means responsive to said data receiving means for initiating a read cycle to read said requested data from said memory concurrently with said searching means determining if a modified version of said requested data is in one of said CPU's for searching; and,

means responsive to said search means for terminating said memory read cycle of said read means to prevent the completion of reading said requested data from said memory if a modified version of said requested data is stored in one of said CPU's.

# FIG. I

EP 0 379 771 A2

# FIG. 2

DATA REQUEST ENTERED AT REQUESTING CPU 10

DATA REQUEST PASSED TO SCU 4

SCU 4 INITIATES DATA LOCATION SEARCH IN SCU DIRECTORY 8

SCU 4 INITIATES READ CYCLE IN SCU MAIN MEMORY 6

SCU DIRECTORY 8 LOCATES MOST CURRENT VERSION OF REQUESTED DATA

MOST CURRENT DATA IN SCU MEMORY ?

YES

SCU MEMORY 6 COMPLETES READ CYCLE WITH OK COMMAND

NO

SCU MEMORY 6 TERMINATES READ CYCLE WITH ABORT COMMAND

SCU 4 SENDS DATA REQUEST TO LOCATED CPU 10

SCU 4 TRANSFERS MOST CURRENT VERSION OF REQUESTED DATA TO REQUESTING CPU 10

DONE

LOCATED CPU 10 READS REQUESTED DATA FROM ITS CPU CACHE 14

SCU 4 REPLACES STORED VERSION OF REQUESTED DATA WITH MOST CURRENT VERSION

LOCATED CPU 10 TRANSFERS REQUESTED DATA TO SCU 4

SCU 4 DESIGNATES SCU MEMORY 6 AS MOST CURRENT DATA SOURCE

FIG. 3